# EUROPEAN PATENT APPLICATION

(11) **EP 4 796 952 A1**
(43) Date of publication of application: **26.08.2026**
(21) Application number: 24883991.2
(22) Date of filing: 28.06.2024
(51) Int. Cl.: G01S 11/12, G01S 11/08

(54) **DISTANCE MEASUREMENT METHOD AND DISTANCE MEASUREMENT APPARATUS**

(30) Priority: 01.11.2023 CN 202311445208
(71) Applicant: HUAWEI TECHNOLOGIES CO., LTD., Shenzhen 518129 (CN)
(72) Inventor: GUO, Chan, Shenzhen, Guangdong 518129 (CN); TANG, Xinxiang, Shenzhen, Guangdong 518129 (CN); YIN, Jian, Shenzhen, Guangdong 518129 (CN)
(74) Representative: Thun, Clemens
(86) International application number: PCT/CN2024/102182
(87) International publication number: WO 2025/091981

(57) **Abstract**

Embodiments of this application provide a ranging method and a ranging apparatus. The ranging method includes: A first device sends a plurality of first service frames to a second device. A current first service frame includes a first ranging start identifier and a first offset, the first offset is an offset between a frame header of any first service frame and a frame header of a first reference frame, and the first reference frame is used for time synchronization between the first device and the second device. The first device receives, from the second device, first information associated with a second moment. The second moment is a moment at which the second device detects the first ranging start identifier. The two ranging parties can accurately complete, by exchanging information about the first offset, ranging without aligning the frame header of the service frame with the frame header of the reference frame. In addition, a constraint that a periodicity of the reference frame needs to be an integer multiple of a periodicity of the service frame is removed. Therefore, configuration flexibility of the service frame and practicability of the ranging method are improved.

## Description

This application claims priority to Chinese Patent Application No. 202311445208.X, filed with the China National Intellectual Property Administration on November 1, 2023 and entitled "RANGING METHOD AND RANGING APPARATUS", which is incorporated herein by reference in its entirety.

### TECHNICAL FIELD

This application relates to the communication field, and in particular, to a ranging method and a ranging apparatus.

### BACKGROUND

Currently, a known ranging technology is as follows: Two ranging parties perform time synchronization based on a reference frame, where the reference frame has a fixed periodicity. In addition, when the reference frame arrives, the two ranging parties send ranging start identifiers by using service frames, so that the two ranging parties determine a distance between the two ranging parties based on time of transmission of the service frames having the ranging identifiers between the two ranging parties. To ensure ranging accuracy, a frame header of the service frame is required to be aligned with a frame header of the reference frame, and the periodicity of the reference frame is required to be an integer multiple of a periodicity of the service frame.

The service frame is used for service transmission between the two ranging parties. However, the foregoing strict requirements on the service frame greatly affect flexibility and freedom of communication between the two ranging parties, and limit promotion and development of the ranging technology.

### SUMMARY

This application provides a ranging method and a ranging apparatus, to improve flexibility and freedom of communication between two ranging parties without affecting ranging accuracy.

According to a first aspect, a ranging method is provided, including: A first device sends a plurality of first service frames to a second device, where a current first service frame in the plurality of first service frames includes a first ranging start identifier and a first offset, the first offset is an offset between a frame header of any first service frame in the plurality of first service frames and a frame header of a first reference frame, the current first service frame and a first service frame corresponding to the first offset are separated by N periodicities T, the first reference frame is used for time synchronization between the first device and the second device, and N≥0; the first device receives a plurality of second service frames from the second device, where a current second service frame in the plurality of second service frames includes a second ranging start identifier and a second offset, the second offset is an offset between a frame header of any second service frame in the plurality of second service frames and the frame header of the first reference frame, the current second service frame and a second service frame corresponding to the second offset are separated by M periodicities T, and M≥0; the first device receives first information from the second device, where the first information is associated with a second moment, and the second moment is a moment at which the second device detects the first ranging start identifier; and the first device determines a distance between the first device and the second device based on the first information, where the distance is associated with the following parameters: a first moment corresponding to the frame header of the first reference frame, the second moment, a third moment, the first offset, the second offset, a value of N, a value of M, and a value of T. The third moment is a moment at which the first device detects the second ranging start identifier.

According to the solution provided in this embodiment of this application, the two ranging parties can accurately complete, by exchanging information about the offset, ranging without aligning the frame header of the service frame with the frame header of the reference frame. In addition, a constraint in a conventional technology that a periodicity of the reference frame needs to be an integer multiple of a periodicity of the service frame is removed. This greatly improves configuration flexibility of the service frame, and further improves practicability of the ranging method.

Alternatively, the foregoing solution may be expressed as follows: The first device sends the first service frame to the second device, where the first service frame includes the first ranging start identifier and the first offset, the first offset is an offset between a frame header of a third service frame and the frame header of the first reference frame, the third service frame and the first service frame are separated by N periodicities T, and N≥0. Then, the first device receives the second service frame from the second device, where the second service frame includes the second ranging start identifier and the second offset, the second offset is an offset between a frame header of a fourth service frame and the frame header of the first reference frame, the fourth service frame and the second service frame are separated by M periodicities T, and M≥0. In addition, the first device receives the first information from the second device, where the first information is associated with the second moment, and the second moment is the moment at which the second device detects the first ranging start identifier. Further, the first device determines the distance between the first device and the second device based on the first information, where the distance is associated with the first moment corresponding to the frame header of the first reference frame, the second moment, the third moment, the first offset, the second offset, the value of N, and the periodicity T, and the third moment is the moment at which the first device detects the ranging start identifier in the second service frame.

In this embodiment of this application, the "current service frame (for example, the current first service frame and the current second service frame)" may also be referred to as a ranging service frame, that is, a service frame used for ranging, or a service frame used to carry a ranging start identifier when ranging is started.

In a possible implementation, the method further includes: The first device sends second information to the second device, where the first information is associated with the third moment.

In an implementation, M=N.

In another implementation, M≠N. In this case, the first information is further associated with the value of M, and the second information is further associated with the value of N.

In an implementation, the periodicity of the reference frame is not the integer multiple of the periodicity of the service frame.

In an implementation, the first offset and the second offset are less than the periodicity of the service frame. In this way, a delay from starting ranging to obtaining a ranging result can be shortened.

In addition, the first service frame is adjacent to the third service frame, and the second service frame is adjacent to the fourth service frame. Similarly, the delay from starting ranging to obtaining the ranging result can be shortened.

In an implementation, the first service frame corresponding to the first offset is a frame previous to the current first service frame, or the first service frame corresponding to the first offset and the current first service frame are a same frame.

The second service frame corresponding to the second offset is a frame previous to the current second service frame, or the second service frame corresponding to the second offset and the current second service frame are a same frame.

In an implementation, when M=N, the distance S between the first device and the second device meets any one of the following conditions: $S = \left[\frac{1}{2}\left(T2_B-T1_A+T4_A-T3_B+offset_a+offset_b\right)-\left(N+1\right)*T\right] * C ;$ or $S = \left[\frac{1}{2}\left(T2_B-T1_A+T4_A-T3_B-offset_a-offset_b\right)-N*T\right] * C$

In another implementation, when M≠N, the distance S between the first device and the second device meets any one of the following conditions: $S = \frac{1}{2} \left[T2_B-T1_A+T4_A-T3_B+offset_a+offset_b-\left(N+1\right)*T-\left(M+1\right)*T\right] * C ;$ or $S = \frac{1}{2} \left[T2_B-T1_A+T4_A-T3_B+offset_a-offset_b-N*T-M*T\right] * C$

T2_B represents the second moment, T1_A represents the first moment determined by the first device, T3_B represents the first moment determined by the second device, T4_A represents the third moment, offset_a represents the first offset, offset_b represents the second offset, T represents the periodicity of the service frame, C represents the speed of light, V_A represents a velocity of the first device, and V_B represents a velocity of the second device.

In an implementation, the first information indicates any one of the second moment, a first result t1, a second result t2, a third result t3, a fourth result t4, and a fifth result t5, where $t 1 = T 2 _B - T 3 _B ;$ $t 2 = T 2 _B - T 3 _B + offset_a ;$ $t 3 = T 2 _B - T 3 _B - offset_a ;$ $t 4 = T 2 _B - T 3 _B - offset_a - N * T ;$ and $t 5 = T 2 _B - T 3 _B + offset_a - \left(N+1\right) * T$

T2_B represents the second moment, T3_B represents the first moment determined by the second device, offset_a represents the first offset, and T represents the periodicity of the service frame.

In addition, the second information indicates the third moment or any value of the following: $t 1 ′ = T 4 _A - T 1 _A ;$ $t 2 ′ = T 4 _A - T 1 _A + offset_b ;$ $t 3 ′ = T 4 _A - T 1 _A - offset_b ;$ $t 4 ′ = T 4 _A - T 1 _A - offset_b - M * T ;$ and $t 5 ′ = T 4 _A - T 1 _A + offset_b - \left(M+1\right) * T$

T4_A represents the third moment, T1_A represents the first moment determined by the first device, offset_b represents the second offset, and T represents the periodicity of the service frame.

A difference is calculated by subtracting T3_B from T2_B, and a difference is calculated by subtracting T1_A from T4_A, so that a ranging error caused by a deviation in the time synchronization that is based on the reference frame and that is between the two ranging parties can be eliminated.

In an implementation, the distance is further associated with a first compensation value and a second compensation value, the first compensation value includes a delay on an internal path of the first device at the first moment, and the second compensation value includes a delay on an internal path of the second device at the first moment.

For example, the distance S between the first device and the second device meets any one of the following conditions: $S = \left[\begin{matrix}\frac{1}{2} \left(T2_B-T1_A+T4_A-T3_B+offset_a+offset_b-F3_A-F3_B\right) - \\ \left(N+1\right) * T\end{matrix}\right] * C + \left(T4_A-T1_A\right) * V_A + \left(T2_B-T3_B\right) * V_B ;$ $S = \left[\frac{1}{2}\left(T2_B-T1_A+T4_A-T3_B-offset_a-offset_b-F3_A-F3_B\right)-N*T\right] * C + \left(\begin{matrix}T 4 _A - \\ T 1 _A\end{matrix}\right) * V_A + \left(T2_B-T3_B\right) * V_B ;$ $S = \frac{1}{2} \left[\begin{matrix}T 2 _B - T 1 _A + T 4 _A - T 3 _B + offset_a + offset_b - F 3 _A - F 3 _B - \left(N+1\right) * T - \\ \left(M+1\right) * T\end{matrix}\right] * C + \left(T4_A-T1_A\right) * V_A + \left(T2_B-T3_B\right) * V_B ; or$ $S = \frac{1}{2} \left[\begin{matrix}T 2 _B - T 1 _A + T 4 _A - T 3 _B - offset_a - offset_b - F 3 _A - F 3 _B - N * T - \\ M * T\end{matrix}\right] * C + \left(T4_A-T1_A\right) * V_A + \left(T2_B-T3_B\right) * V_B$

T2_B represents the second moment, T1_A represents the first moment determined by the first device, T3_B represents the first moment determined by the second device, T4_A represents the third moment, offset_a represents the first offset, offset_b represents the second offset, T represents the periodicity of the service frame, C represents the speed of light, V_A represents the velocity of the first device, and V_B represents the velocity of the second device, F3_A represents the first compensation value, and F3_B represents the second compensation value.

In this case, the first information indicates any one of a sixth result t6, a seventh result t7, an eighth result t8, a ninth result t9, and a tenth result t10, where $t 6 = T 2 _B - T 3 _B - F 3 _B ;$ $t 7 = T 2 _B - T 3 _B + offset_a - F 3 _B ;$ $t 8 = T 2 _ B - T 3 _ B - offset _ a - F 3 _ B ;$ $t 9 = T 2 _ B - T 3 _ B - offset _ a - F 3 _ B - N * T ;$ and $t 10 = T 2 _ B - T 3 _ B + offset _ a - F 3 _ B - \left(N+1\right) * T$

In addition, the second information indicates any value of the following: $t 6 ′ = T 4 _ A - T 1 _ A - F 3 _ A ;$ $t 7 ′ = T 4 _ A - T 1 _ A + offset _ b - F 3 _ A ;$ $t 8 ′ = T 4 _ A - T 1 _ A - offset _ b - F 3 _ A ;$ $t 9 ′ = T 4 _ A - T 1 _ A - offset _ b - F 3 _ A - M * T ;$ and $t 10 ′ = T 4 _ A - T 1 _ A + offset _ b - F 3 _ A - \left(M+1\right) * T$

T2_B represents the second moment, T3_B represents the first moment determined by the second device, offset_a represents the first offset, T represents a periodicity of a service frame, and F3_B represents the second compensation value.

In an implementation, the method further includes: The first device performs, at a fourth moment, detection of a first delay on the internal path of the first device; the first device sends a first signal on the internal path at the fourth moment, and records a first phase of the first signal at the fourth moment, where the first signal is a periodic signal having a first pattern; the first device receives the first signal from the internal path at a fifth moment, and records a second phase of the first signal at the fifth moment; the first device determines a first dynamic delay based on the first phase and the second phase, where the first dynamic delay includes a non-integer periodicity part of a phase difference between the first phase and the second phase; the first device sends the first signal on the internal path at the third moment, and records a third phase of the first signal at the third moment; the first device receives the first signal from the internal path at a sixth moment, and records a fourth phase of the first signal at the sixth moment; the first device determines a second dynamic delay based on the third phase and the fourth phase, where the second dynamic delay includes a non-integer periodicity part of a phase difference between the third phase and the fourth phase; and in this way, the first device determines the first compensation value based on the first delay and a deviation between the first dynamic delay and the second dynamic delay.

In the foregoing manner, impact of the internal delay of the device on ranging accuracy can be reduced, and in addition, the internal delay can be quickly determined, thereby improving ranging efficiency.

The ranging method provided in this embodiment of this application can be effectively used for ranging between satellites. To be specific, the first device and the second device include a satellite, and the service frame includes an optical transport network OTN frame or an inter-satellite link ISL frame.

However, this application is not limited thereto. The ranging method provided in this embodiment of this application may also be effectively used for ranging between vehicles and other transportation means.

According to a second aspect, a ranging method is provided. The method includes: A first device sends a first service frame to a second device, where the first service frame includes a first ranging start identifier, a frame header of the first service frame corresponds to a frame header of a first virtual frame, the frame header of the first virtual frame corresponds to a frame header of a first reference frame, a first periodicity corresponding to the first virtual frame is an integer multiple of a second periodicity corresponding to the first service frame, and the first periodicity is an integer multiple of a third periodicity corresponding to the first reference frame; the first device receives a second service frame from the second device, where the second service frame includes a second ranging start identifier, and a frame header of the second service frame corresponds to the frame header of the first virtual frame; the first device receives first information from the second device, where the first information is associated with a second moment, and the second moment is a moment at which the second device detects the first ranging start identifier; and the first device determines a distance between the first device and the second device based on the first information, where the distance is associated with the following parameters: a first moment corresponding to the frame header of the first virtual frame, the second moment, and a third moment. The third moment is a moment at which the first device detects the ranging start identifier in the second service frame.

Alternatively, the foregoing method may be described as follows: The ranging method is applied to a communication system including the first device and the second device, and the first device and the second device perform time synchronization by using the reference frame, and perform communication by using the service frame, where the service frame has the second periodicity, and the reference frame has the third periodicity. The ranging method includes: The first device sends the first service frame to the second device, where the first service frame includes the ranging start identifier, the frame header of the first service frame corresponds to the frame header of the first virtual frame in a plurality of virtual frames, the plurality of virtual frames have the first periodicity, the frame header of the first virtual frame corresponds to the frame header of the first reference frame, the first periodicity is the integer multiple of the second periodicity, and the first periodicity is the integer multiple of the third periodicity; the first device receives the second service frame from the second device, where the second service frame includes the ranging start identifier, and the frame header of the second service frame corresponds to the frame header of the first virtual frame; the first device receives the first information from the second device, where the first information is associated with the second moment, and the second moment is the moment at which the second device detects the ranging start identifier in the first service frame; and the first device determines the distance between the first device and the second device based on the first information, where the distance is associated with the first moment corresponding to the frame header of the first virtual frame, the second moment, and the third moment, and the third moment is the moment at which the first device detects the ranging start identifier in the second service frame.

Two ranging parties maintain the virtual frame, so that a constraint in the conventional technology that the periodicity of the reference frame needs to be an integer multiple of the periodicity of the service frame is removed. This greatly improves configuration flexibility of the service frame, and further improves practicability of the ranging method.

For example, the first information indicates the second moment or a first result t1, where $t 1 = T 2 _ B - T 3 _ B$

T2_B represents the second moment, and T3_B represents the first moment determined by the second device.

In an implementation, the distance is further associated with a first compensation value and a second compensation value, the first compensation value includes a delay on an internal path of the first device at the first moment, and the second compensation value includes a delay on an internal path of the second device at the first moment.

In this case, the first information indicates a second result t2, where $t 2 = T 2 _ B - T 3 _ B - F 3 _ B$

T2_B represents the second moment, T3_B represents the first moment determined by the second device, and F3_B represents the second compensation value.

In an implementation, the method further includes: The first device performs, at a fourth moment, detection of a first delay on the internal path of the first device; the first device sends a first signal on the internal path at the fourth moment, and records a first phase of the first signal at the fourth moment, where the first signal is a periodic signal; the first device receives the first signal from the internal path at a fifth moment, and records a second phase of the first signal at the fifth moment; the first device determines a first dynamic delay based on the first phase and the second phase, where the first dynamic delay includes a non-integer periodicity part of a phase difference between the first phase and the second phase; the first device sends the first signal on the internal path at the third moment, and records a third phase of the first signal at the third moment; the first device receives the first signal from the internal path at a sixth moment, and records a fourth phase of the first signal at the sixth moment; the first device determines a second dynamic delay based on the third phase and the fourth phase, where the second dynamic delay includes a non-integer periodicity part of a phase difference between the third phase and the fourth phase; and the first device determines the first compensation value based on the first delay and a deviation between the first dynamic delay and the second dynamic delay.

In the foregoing manner, impact of the internal delay of the device on ranging accuracy can be reduced, and in addition, the internal delay can be quickly determined, thereby improving ranging efficiency.

In this embodiment of this application, the third periodicity is not an integer multiple of the second periodicity.

In addition, there may be an offset between the frame header of the first service frame and the frame header of the first reference frame.

In addition, the frame header of the first service frame is aligned with the frame header of the first virtual frame, or there is a preset offset between the frame header of the first service frame and the frame header of the first virtual frame.

In an implementation, the service frame includes an optical transport network OTN frame or an inter-satellite link ISL frame.

In addition, the first device includes a satellite or a transport device.

According to a third aspect, a ranging apparatus is provided, including a transceiver unit and a processing unit. The transceiver unit is configured to send a plurality of first service frames, where a current first service frame in the plurality of first service frames includes a first ranging start identifier and a first offset, the first offset is an offset between a frame header of any first service frame in the plurality of first service frames and a frame header of a first reference frame, the current first service frame and a first service frame corresponding to the first offset are separated by N periodicities T, the first reference frame is used for time synchronization between a first device and a second device, and N≥0. In addition, the transceiver unit is configured to receive a plurality of second service frames, where a current second service frame in the plurality of second service frames includes a second ranging start identifier and a second offset, the second offset is an offset between a frame header of any second service frame in the plurality of second service frames and the frame header of the first reference frame, the current second service frame and a second service frame corresponding to the second offset are separated by M periodicities T, and M≥0. In addition, the transceiver unit is configured to receive first information from the second device, where the first information is associated with a second moment, and the second moment is a moment at which the second device detects the first ranging start identifier. The processing unit is configured to determine a distance between the first device and the second device based on the first information, where the distance is associated with the following parameters: a first moment corresponding to the frame header of the first reference frame, the second moment, a third moment, the first offset, the second offset, a value of N, a value of M, and a value of T, where the third moment is a moment at which the first device detects the second ranging start identifier.

According to the solution provided in this embodiment of this application, the two ranging parties can accurately complete, by exchanging information about the offset, ranging without aligning the frame header of the service frame with the frame header of the reference frame. In addition, a constraint in a conventional technology that a periodicity of the reference frame needs to be an integer multiple of a periodicity of the service frame is removed. This greatly improves configuration flexibility of the service frame, and further improves practicability of the ranging method.

In a possible implementation, the transceiver unit is further configured to send second information to the second device, where the first information is associated with the third moment.

In another possible implementation, the processing unit is further configured to perform, at a fourth moment, detection of a first delay on the internal path of the first device. In addition, the transceiver unit is further configured to: send a first signal on the internal path at the fourth moment, and record a first phase of the first signal at the fourth moment, where the first signal is a periodic signal having a first pattern. The transceiver unit is further configured to: receive the first signal from the internal path at a fifth moment, and record a second phase of the first signal at the fifth moment. The processing unit is further configured to determine a first dynamic delay based on the first phase and the second phase, where the first dynamic delay includes a non-integer periodicity part of a phase difference between the first phase and the second phase. In addition, the transceiver unit is further configured to: send the first signal on the internal path at the third moment, and record a third phase of the first signal at the third moment. The transceiver unit is further configured to: receive the first signal from the internal path at a sixth moment, and record a fourth phase of the first signal at the sixth moment. The processing unit is further configured to determine a second dynamic delay based on the third phase and the fourth phase, where the second dynamic delay includes a non-integer periodicity part of a phase difference between the third phase and the fourth phase. The processing unit is configured to determine the first compensation value based on the first delay and a deviation between the first dynamic delay and the second dynamic delay.

The ranging apparatus provided in the third aspect may be configured to perform the ranging method in any one of the first aspect and the possible implementations of the first aspect. In addition, specific steps performed by units in the ranging apparatus are similar to steps in the ranging method in any one of the first aspect and the possible implementations of the first aspect, and detailed descriptions thereof are omitted herein.

According to a fourth aspect, a ranging apparatus is provided, including a transceiver unit and a processing unit. The transceiver unit is configured to send a first service frame to a second device, where the first service frame includes a first ranging start identifier, a frame header of the first service frame corresponds to a frame header of a first virtual frame, the frame header of the first virtual frame corresponds to a frame header of a first reference frame, a first periodicity corresponding to the first virtual frame is an integer multiple of a second periodicity corresponding to the first service frame, and the first periodicity is an integer multiple of a third periodicity corresponding to the first reference frame. The transceiver unit is further configured to receive a second service frame from the second device, where the second service frame includes a second ranging start identifier, and a frame header of the second service frame corresponds to the frame header of the first virtual frame. The transceiver unit is further configured to receive first information from the second device, where the first information is associated with a second moment, and the second moment is a moment at which the second device detects the first ranging start identifier. The processing unit is configured to determine a distance between the first device and the second device based on the first information, where the distance is associated with the following parameters: a first moment corresponding to the frame header of the first virtual frame, the second moment, and a third moment. The third moment is a moment at which the first device detects the ranging start identifier in the second service frame.

In an implementation, the processing unit is further configured to perform, at a fourth moment, detection of a first delay on an internal path of the first device. The transceiver unit is further configured to: send a first signal on the internal path at the fourth moment, and record a first phase of the first signal at the fourth moment, where the first signal is a periodic signal. The transceiver unit is further configured to: receive the first signal from the internal path at a fifth moment, and record a second phase of the first signal at the fifth moment. The processing unit is further configured to determine a first dynamic delay based on the first phase and the second phase, where the first dynamic delay includes a non-integer periodicity part of a phase difference between the first phase and the second phase. The transceiver unit is further configured to: send the first signal on the internal path at the third moment, and record a third phase of the first signal at the third moment. The transceiver unit is further configured to: receive the first signal from the internal path at a sixth moment, and record a fourth phase of the first signal at the sixth moment. The processing unit is further configured to determine a second dynamic delay based on the third phase and the fourth phase, where the second dynamic delay includes a non-integer periodicity part of a phase difference between the third phase and the fourth phase. The processing unit is further configured to determine a first compensation value based on the first delay and a deviation between the first dynamic delay and the second dynamic delay.

The ranging apparatus provided in the fourth aspect may be configured to perform the ranging method in any one of the second aspect and the possible implementations of the second aspect. In addition, specific steps performed by units in the ranging apparatus are similar to steps in the ranging method in any one of the second aspect and the possible implementations of the second aspect, and detailed descriptions thereof are omitted herein.

According to a fifth aspect, a ranging device is provided, including a processor. The processor is coupled to a memory, and may be configured to perform the method in any one of the first aspect and the second aspect and the possible implementations of the first aspect and the second aspect. Optionally, the device further includes the memory. Optionally, the device further includes a communication interface, and the processor is coupled to the communication interface.

The processor is configured to implement a function of the processing unit in any one of the third aspect and the possible implementations of the third aspect, and the communication interface is configured to implement a function of the transceiver unit in any one of the third aspect and the possible implementations of the third aspect. Detailed descriptions thereof are omitted herein.

Alternatively, the processor is configured to implement a function of the processing unit in any one of the fourth aspect and the possible implementations of the fourth aspect, and the communication interface is configured to implement a function of the transceiver unit in any one of the fourth aspect and the possible implementations of the fourth aspect. Detailed descriptions thereof are omitted herein.

In an implementation, the device is a terminal device or a communication device. In this case, the communication interface may be a transceiver, or an input/output interface.

In another implementation, the device is a chip or a chip system. In this case, the communication interface may be an input/output interface, an interface circuit, an output circuit, an input circuit, a pin, a related circuit, or the like in the chip or the chip system. The processor may alternatively be embodied as a processing circuit or a logic circuit.

According to a sixth aspect, a ranging apparatus is provided, including an input circuit, an output circuit, and a processing circuit. The processing circuit is configured to: receive a signal by using the input circuit, and transmit a signal by using the output circuit, so that the method in any one of the first aspect or the second aspect and any one of the possible implementations of the aspects is implemented.

In a specific implementation process, the apparatus may be a chip. The input circuit may be an input pin. The output circuit may be an output pin. The processing circuit may be a transistor, a gate circuit, a trigger, any logic circuit, or the like. An input signal received by the input circuit may be received and input by, for example without limitation to, a receiver, and a signal output by the output circuit may be output to and transmitted by, for example without limitation to, a transmitter. The input circuit and the output circuit may be different circuits or may be a same circuit, and in this case, the circuit is used as the input circuit and the output circuit respectively at different moments. Specific implementations of the processor and the various circuits are not limited in embodiments of this application.

According to a seventh aspect, a ranging apparatus is provided, including a processor and a memory. The processor is configured to: read instructions stored in the memory, receive a signal through a receiver, and transmit a signal through a transmitter, to perform the method in any one of the first aspect or the second aspect and the possible implementations of the aspects.

Optionally, there are one or more processors, and there are one or more memories.

Optionally, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processor in the seventh aspect may be a chip, and the processor may be implemented by hardware or software. When implemented by the hardware, the processor may be a logic circuit, an integrated circuit, or the like; or when implemented by the software, the processor may be a general-purpose processor, and is implemented by reading software code stored in the memory. The memory may be integrated in the processor, or located outside the processor and exist independently.

According to an eighth aspect, a computer program product is provided. The computer program product includes a computer program (which may also be referred to as code or instructions). When the computer program is run, a computer is caused to perform the method in any one of the first aspect or the second aspect and any one of the possible implementations of the aspects.

According to a ninth aspect, a computer-readable medium is provided. The computer-readable medium stores a computer program (which may also be referred to as code or instructions). When the computer program is run on a computer, the computer is caused to perform the method in any one of the first aspect or the second aspect and any one of the possible implementations of the aspects.

### BRIEF DESCRIPTION OF DRAWINGS

FIG. 1 is a diagram of a communication system applicable to a ranging method according to an embodiment of this application;
FIG. 2 is a diagram of an example of a ranging method according to an embodiment of this application;
FIG. 3 is a diagram of an example of a time sequence relationship between a reference frame and service frames of two ranging parties;
FIG. 4 is a diagram of an example of an internal path and an apparatus for measuring a delay on the internal path;
FIG. 5 is a diagram of another example of an internal path and an apparatus for measuring a delay on the internal path;
FIG. 6 is a diagram of still another example of an internal path and an apparatus for measuring a delay on the internal path;
FIG. 7 is a diagram of another example of a ranging method according to an embodiment of this application;
FIG. 8 is a diagram of an example of a time sequence relationship between a reference frame, a service frame, and a virtual frame of two ranging parties;
FIG. 9 is a diagram of an example of a ranging apparatus according to an embodiment of this application; and
FIG. 10 is a diagram of another example of a ranging apparatus according to an embodiment of this application.

### DESCRIPTION OF EMBODIMENTS

The following describes technical solutions of this application with reference to accompanying drawings.

For ease of understanding of embodiments of this application, the following descriptions are provided.

First, in the following text descriptions or accompanying drawings in embodiments of this application, terms such as "first", "second", and the like, and various numbers are merely used for differentiation for ease of description, do not need to be used to describe a specific order or sequence, and are not used to limit the scope of embodiments of this application. For example, different light beams are distinguished.

Second, in the following embodiments of this application, terms such as "include", "have", and any variants thereof mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.

Third, in embodiments of this application, terms such as "example" or "for example" are used to represent giving an example, an illustration, or a description. Any embodiment or design scheme described with "example" or "for example" should not be explained as being more preferred or having more advantages than another embodiment or design scheme. A word like "example" or "for example" is used to present a related concept in a specific manner for ease of understanding.

Fourth, in the accompanying drawings of this application, for ease of description, the accompanying drawings are merely examples, and are not drawn strictly according to a scale.

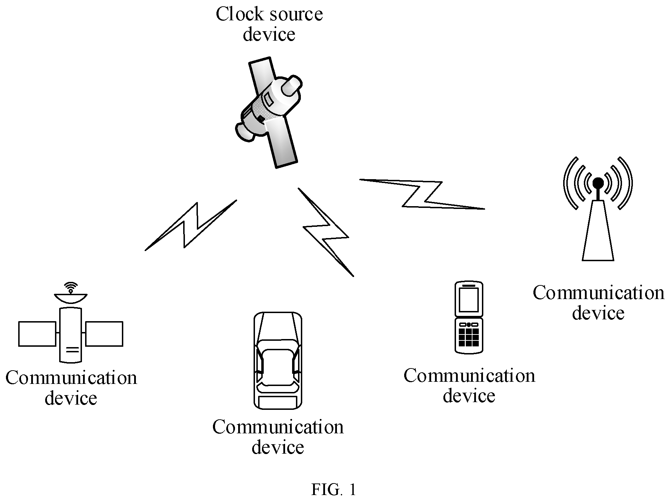

FIG. 1 is a diagram of an example of a communication system applicable to a ranging solution of this application. As shown in FIG. 1, the communication system includes a clock source device and communication devices.

The clock source device is configured to provide a time reference for each communication device. For example, the clock source device may be a time provision device that is based on satellite systems. The satellite systems may be various satellite time provision navigation systems such as a global positioning system (Global Positioning System, GPS) or a BeiDou system.

There is a communication connection between the clock source device and the communication device. The communication connection between the clock source device and the communication device may be a wired connection, or may be a wireless connection. This is not particularly limited in embodiments of this application.

The clock source device periodically sends a reference frame to the communication device, and the communication device performs time synchronization based on the reference frame. The reference frame may also be referred to as a reference signal, a time synchronization reference frame, a time synchronization signal, or the like, and has a fixed sending periodicity.

For example, in the GPS system, the reference frame is a pulse per second (Pulse Per Second, PPS) signal. A global positioning system (Global Positioning System, GPS) receiver is configured in the communication device (for example, a clock module in the communication device). The GPS receiver receives a radio frequency signal from the GPS (that is, an example of a clock source), and then performs signal processing, for example, frequency conversion and demodulation, to provide a PPS signal for the communication device. The communication device further includes its own device clock. A counter is generated based on self-running of the device clock. The counter is reset to zero at a rising edge of the PPS signal, and a maximum value of the counter is a periodicity of the external PPS signal, that is, 1 second. In this way, time synchronization based on the PPS signal is implemented for each communication device.

In addition, in embodiments of this application, there is a communication connection between the communication devices. The communication connection between all the communication devices may be a wired connection, or may be a wireless connection. This is not particularly limited in embodiments of this application.

The communication device performs transmission of a service frame on the communication connection, to complete information exchange. The service frame may also be referred to as a communication frame, is used to carry data, signaling, or the like, and is a signal frame transmitted between physical layers of the communication device. In addition, in embodiments of this application, periodicities of service frames of all the communication devices are the same.

For example, the communication connection between the communication devices may be a communication connection that is based on an optical transport network (Optical Transport Network, OTN) technology. In this case, the service frame may be an OTN frame. An OTN is a transport network based on wavelength division multiplexing, and implements transport, multiplexing, route selection, monitoring, and the like of a service signal in an optical domain. In addition, the OTN frame is a standard frame format formulated for the optical transport network.

For another example, the communication connection between the communication devices may be a communication connection that is based on an inter-satellite link (Inter-Satellite Link, ISL) technology. In this case, the service frame may be an ISL frame or the like. An ISL may also be referred to as an inter-satellite link or a cross link (Cross link), and is a link used for communication between satellites. Each satellite in the inter-satellite link serves as one node in a space network, causing a communication signal to be transmitted along an optimal path as required, to organize a global communication network. An SL frame is used for service transmission between satellites.

In this application, the clock source device may be a ground device (for example, a base station) or a space-based device (for example, a satellite).

In addition, the communication device may be a ground device (for example, a mobile termination or an intelligent vehicle), or may be a space-based device (for example, a satellite). In addition, the communication device may be a fixed device, or may be a mobile device. This is not particularly limited in this application.

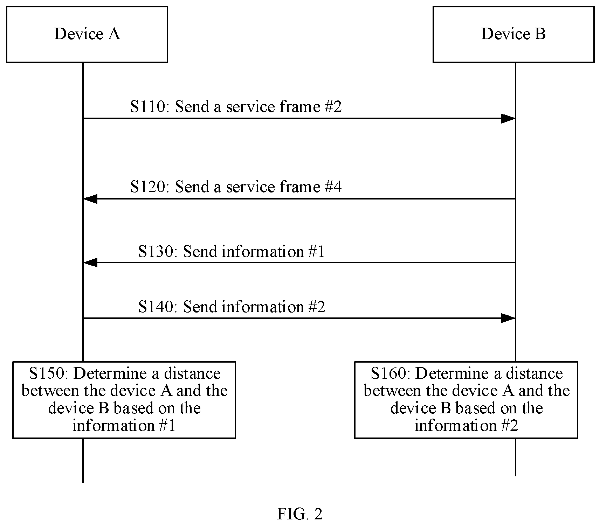

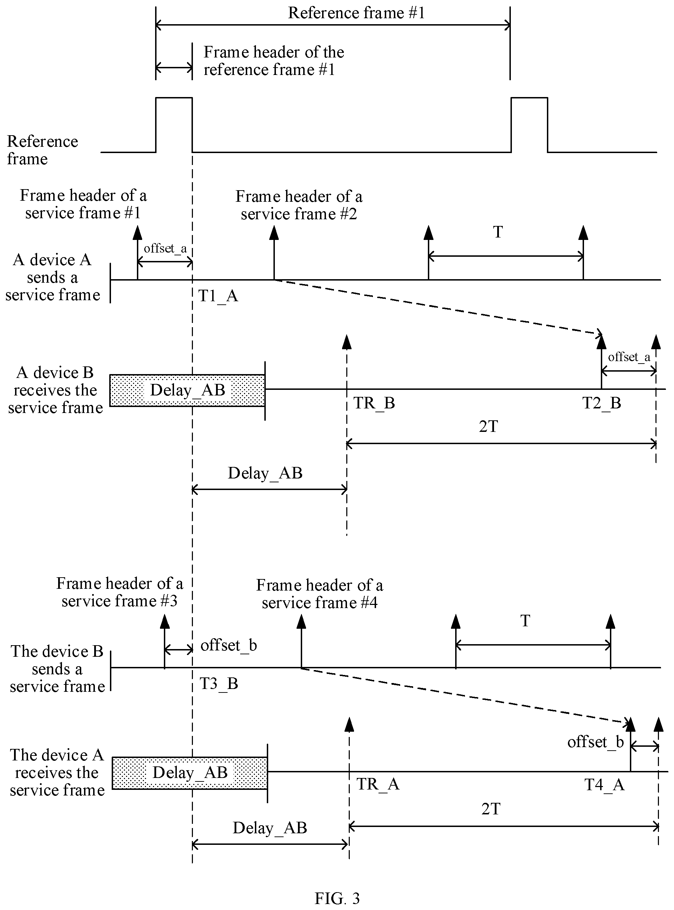

The following describes in detail an example of a ranging method provided in this application with reference to FIG. 2 to FIG. 6. FIG. 2 is a schematic interaction diagram of a ranging method 100 according to this application. FIG. 3 is a time sequence diagram of service frames exchanged between a device A and a device B.

The ranging method 100 is used to measure a distance between the device A and the device B (specifically, a distance between the device A and the device B at a moment T1_A described below). The device A (that is, an example of a first device) and the device B (that is, an example of a second device) perform time synchronization based on a reference frame (for example, a PPS signal), and the device A and the device B perform service transmission based on a service frame (for example, an OTN frame or an ISL frame). The foregoing process is similar to that of a conventional technology, and to avoid repetition, detailed descriptions thereof are omitted herein.

As shown in FIG. 3, the device A starts a ranging procedure at a moment (denoted as the moment T1_A), determined by the device A, at which a falling edge of a frame header of a reference frame #1 (that is, an example of a first reference frame) arrives.

First, the device A determines a service frame #1 (that is, any frame in first service frames) from a plurality of service frames of the device A.

In addition, the device A determines an offset (denoted as offset_a) between a frame header of the service frame #1 and the frame header of the reference frame #1.

For example, as shown in FIG. 3, the service frame #1 is a service frame whose frame header is before the frame header of the reference frame #1 and whose frame header is closest to the frame header of the reference frame #1. In this case, offset_a is less than a periodicity (denoted as T) of the service frame.

Then, the device A determines a service frame #2 (that is, an example of a current first service frame) from the plurality of service frames of the device A. The service frame #2 may also be referred to as a ranging service frame in this embodiment of this application.

The service frame #2 meets the following condition: A frame header of the service frame #2 is after the frame header of the reference frame #1 in time domain.

In other words, in this application, the service frame #2 and the service frame #1 are separated by N periodicities, where N≥0.

For example, when the service frame #2 and the service frame #1 are a same frame, N=0.

For another example, when the service frame #2 is a next frame of the service frame #1, N=1.

As shown in FIG. 2, in S110, the device A sends a ranging start identifier and information about offset_a in the service frame #2. The ranging start identifier indicates that the device A starts ranging, and the ranging start identifier may be a pulse identifier with a fixed specification, so that the device B can identify the ranging start identifier from the service frame, and complete a subsequent ranging procedure based on the ranging start identifier.

For example, as shown in FIG. 3, the service frame #2 is a service frame whose frame header is after the frame header of the reference frame #1 and whose frame header is closest to the frame header of the reference frame #1. In this case, the service frame #2 is adjacent to the service frame #1 in time domain, that is, N=1.

Similarly, as shown in FIG. 3, the device B starts a ranging procedure at a moment (denoted as a moment T3_B), determined by the device B, at which the falling edge of the frame header of the reference frame #1 arrives.

It should be noted that, theoretically, the moment T1_A and the moment T3_B are a same moment. Because time synchronization between the device A and the device B based on the reference frame may have a deviation, a deviation may exist between the moment, determined by the device A, at which the falling edge of the frame header of the reference frame #1 arrives and the moment, determined by the device B, at which the falling edge of the frame header of the reference frame #1 arrives. Therefore, in this embodiment of this application, for ease of understanding, the moment, determined by the device A, at which the falling edge of the frame header of the reference frame #1 arrives and the moment, determined by the device B, at which the falling edge of the frame header of the reference frame #1 arrives are recorded in a distinguished manner.

Similarly, the device B determines a service frame #3 (that is, any frame in second service frames) from a plurality of service frames of the device B.

In addition, the device B determines an offset (denoted as offset_b) between a frame header of the service frame #3 and the frame header of the reference frame #1.

For example, as shown in FIG. 3, the service frame #3 is a service frame whose frame header is before the frame header of the reference frame #1 and whose frame header is closest to the frame header of the reference frame #1. In this case, offset_b is less than a periodicity (denoted as T) of the service frame.

Then, the device B determines a service frame #4 (that is, an example of a current second service frame) from the plurality of service frames of the device B. The service frame #4 may also be referred to as a ranging service frame in this embodiment of this application.

The service frame #4 meets the following condition: A frame header of the service frame #4 is after the frame header of the reference frame #1 in time domain.

In other words, in this application, the service frame #4 and the service frame #3 are separated by M periodicities, where M≥0.

For example, when the service frame #4 and the service frame #3 are a same frame, M=0.

For another example, when the service frame #4 is a next frame of the service frame #3, M=1.

As shown in FIG. 2, in S120, the device B sends a ranging start identifier and information about offset_b in the service frame #4. The ranging start identifier indicates that the device B starts ranging, and the ranging start identifier may be a pulse identifier with a fixed specification, so that the device A can identify the ranging start identifier from the service frame, and complete a subsequent ranging procedure based on the ranging start identifier.

For example, as shown in FIG. 3, the service frame #4 is a service frame whose frame header is after the frame header of the reference frame #1 and whose frame header is closest to the frame header of the reference frame #1. In this case, the service frame #4 is adjacent to the service frame #3 in time domain, that is, M=1.

A value of M may be the same as or different from a value of N. This is not particularly limited in this application. For example, when the value of N is the same as the value of M, the device A and the device B do not need to perform transmission of information indicating the value of M and the value of N. When the value of N is different from the value of M, the device A and the device B may determine the value of M and the value of N through negotiation or signaling exchange.

As shown in FIG. 3, the device B detects the ranging start identifier at a moment T2_B (that is, an example of a second moment).

The device A detects the ranging start identifier at a moment T4_B (that is, an example of a third moment).

As shown in FIG. 2, in S130, the device B sends information #1 (that is, an example of first information) to the device A, where the information #1 is associated with T2_B. In other words, the information #1 is determined based on T2_B.

In S140, the device A sends information #2 (that is, an example of second information) to the device B, where the information #2 is associated with T4_A. In other words, the information #2 is determined based on T4_A.

In S150, the device A determines a distance between the device A and the device B based on the information #1.

In S160, the device B determines a distance between the device A and the device B based on the information #2.

Specifically, assuming that a distance between the device A and the device B is S, when the device A and the device B are relatively static, duration of transmitting a signal from the device A to the device B is Delay_AB=S/C, where C represents the speed of light.

In a current ranging periodicity (or a ranging period), relative positions of the frame header of the service frame #1 and the frame header of the reference frame #1 are fixed (the offset is offset_a), and relative positions of the frame header of the service frame #1 and the frame header of the service frame #2 are fixed (an offset is N*T). Therefore, a time domain position of the reference frame #1 after Delay_AB is elapsed can be deduced based on a moment at which the device B receives the frame header of the service frame #2 (that is, the moment T2_B at which the device B detects the ranging start identifier), offset_a, and N*T, and is denoted as TR_B.

That is, TR_B=T2_B+offset_a-(N+1)*T. For example, when N=1, TR_B=T2_B+offset_a-2*T.

Alternatively, TR_B=T2_B-offset_a-N*T. For example, when N=1, TR_B=T2_B-offset_a-T.

In this case, an interval between TR_B and T1_A is Delay_AB, and further, S=[T2_B+offset_a-(N+1)*T-T1_A]*C can be determined.

Similarly, relative positions of the frame header of the service frame #3 and the frame header of the reference frame #1 are fixed (the offset is offset_b), and relative positions of the frame header of the service frame #3 and the frame header of the service frame #4 are fixed (an offset is M*T). Therefore, a time domain position of the reference frame #1 after Delay_AB is elapsed can be deduced based on a moment at which the device A receives the frame header of the service frame #4 (that is, the moment T4_A at which the device A detects the ranging start identifier), offset_b, and M*T, and is denoted as TR_A.

That is, TR_A=T4_A+offset_b-(M+1)*T. For example, when M=1, TR_A=T4_A+offset_b-2*T.

Alternatively, TR_A=T4_A-offset_b-M*T. For example, when M=1, TR_A=T4_A-offset_b-T.

In this case, an interval between TR_A and T3_B is Delay_AB, and further, S=[T4_A+offset_b-(M+1)*T-T3_B]*C can be determined.

In this application, subsequent ranging processes of the device A and the device B are different depending on actual cases. The following separately describes processing in different cases in detail.

### Case 1

To be specific, the device A and the device B are relatively static, and the deviation in the synchronization between the device A and the device B based on the reference frame is not considered.

In this case, the device A may determine the distance between the device A and the device B based on values of T1_A, T2_B, offset_a, N, M, and T. The information #1 may include information about T2_B, and the information #2 may include information about T4_A.

### Case 2

To be specific, the device A and the device B are relatively static, and the deviation in the synchronization between the device A and the device B based on the reference frame is considered.

In this case, impact of the deviation on ranging accuracy may be eliminated according to the following principle.

As described above, S=[T4_A+offset_b-(N+1)*T-T3_B]*C, and S=[T2_B+offset_a-(M+1)*T-T1_A]*C. Therefore, S=½[T2_B-T1_A+T4_A-T3_B+offset_a+offset_b-(N+1)*T-(M+1)*T]*C can be deduced.

Calculation processes of T4_A-T1_A and T2_B-T3_B can eliminate the deviation in the synchronization between the device A and the device B based on the reference frame.

In this case, the information #1 may include any one of t1, t2, t3, t4, and t5, where $t 1 = T 2 _ B - T 3 _ B ;$ $t 2 = T 2 _ B - T 3 _ B + offset _ a ;$ $t 3 = T 2 _ B - T 3 _ B - offset _ a ;$ $t 4 = T 2 _ B - T 3 _ B - offset _ a - N * T ;$ and $t 5 = T 2 _ B - T 3 _ B + offset _ a - \left(N+1\right) * T$

Similarly, the information #2 may include any one of t1', t2', t3', t4', and t5', where $t 1 ′ = T 4 _ A - T 1 _ A ;$ $t 2 ′ = T 4 _ A - T 1 _ A + offset _ b ;$ $t 3 ′ = T 4 _ A - T 1 _ A - offset _ b ;$ $t 4 ′ = T 4 _ A - T 1 _ A - offset _ b - M * T ;$ and $t 5 ′ = T 4 _ A - T 1 _ A + offset _ b - \left(M+1\right) * T$

It should be noted that the foregoing lists a solution in which the two ranging parties jointly calculate the distance. However, this application is not limited thereto. For example, the device A may not send the information #2, and the device A unilaterally determines the distance S between the device A and the device B based on the information #1. In addition, the device A may further notify the device B of information about the distance S based on an actual requirement. To avoid repetition, descriptions of a same or similar case are omitted below.

### Case 3

To be specific, the device A and the device B move relative to each other, and the deviation in the synchronization between the device A and the device B based on the reference frame is considered.

In this case, the device A may determine a movement velocity (including a velocity direction and a velocity value, denoted as V_A) of the device A and a movement velocity (including a velocity direction and a velocity value, denoted as V_B) of the device B, and calculate displacement of the device A and the device B during Delay_AB, to determine the distance between the device A and the device B when the device A and the device B initiate ranging (that is, at T1_A or T3_B).

For example, in this case, the distance S between the device A and the device B when the two parties initiate ranging meets any one of the following conditions: $S = \frac{1}{2} \left[T2_B-T1_A+T4_A-T3_B+offset_a+offset_b-\left(N+1\right)*T-\left(M+1\right)*T\right] * C + \left(\begin{matrix}T 4 _ A - \\ T 1 _ A\end{matrix}\right) * V _ A + \left(T2_B-T3_B\right) * V _ B ; or$ $S = \frac{1}{2} \left(T2_B-T1_A+T4_A-T3_B-offset_a-offset_b-N*T-M*T\right] * C + \left(\begin{matrix}T 4 _ A - \\ T 1 _ A\end{matrix}\right) * V _ A + \left(T2_B-T3_B\right) * V _ B$

### Case 4

To be specific, in addition to relative movement between the device A and the device B, and the deviation in the synchronization between the device A and the device B based on the reference frame, impact of an internal delay of the device A and an internal delay of the device B on the ranging accuracy is further considered in this embodiment of this application.

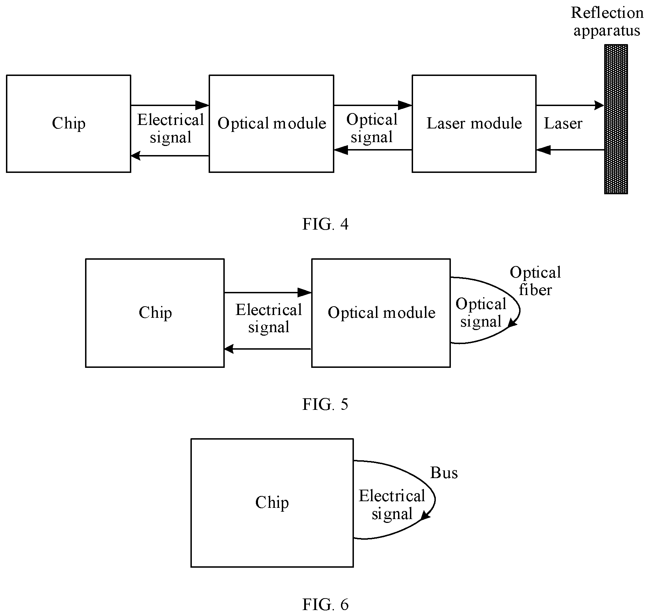

As shown in FIG. 4, from adding a timestamp (for example, the ranging start identifier, the information #1, or the information #2) to a service frame by a communication device to transmitting the service frame from an output port of the communication device, an internal delay generated due to processing on an internal path needs to be experienced.

For example, as shown in FIG. 4, the internal path may include a chip, an optical module, a laser module, and the like. The chip is configured to add the timestamp to the service frame. The chip may be, for example, a field programmable gate array (Field Programmable Gate Array, FPGA). The optical module is configured to perform optical-electrical conversion of signals. The laser module is configured to convert optical signals into laser signals and transmit the laser signals.

It should be noted that the internal path of the communication device shown in FIG. 4 is merely an example for description, and this application is not limited thereto. For example, as shown in FIG. 5, the internal path may include only a chip and an optical module. Alternatively, as shown in FIG. 6, the internal path may include only a chip. In other words, in this embodiment of this application, an internal path on which monitoring and detection of a delay need to be performed may be selected based on an actual error source and magnitude.

It is found through research that the internal delay includes a dynamic change part (denoted as a dynamic delay) and a fixed part (denoted as a fixed delay), where the dynamic delay varies with an environment, a parameter, and the like in a case in which a service is sent, and the fixed delay remains unchanged each time the service is sent.

That is, the internal delay varies at different moments.

In this case, the distance S between the device A and the device B when the two parties initiate ranging meets any one of the following conditions: $S = \frac{1}{2} \left[\begin{matrix}T 2 _ B - T 1 _ A + T 4 _ A - T 3 _ B + offset _ a + offset _ b - F 3 _ A - F 3 _ B - \left(N+1\right) * T - \\ \left(M+1\right) * T\end{matrix}\right] * C + \left(T4_A-T1_A\right) * V _ A + \left(T2_B-T3_B\right) * V _ B ; or$ $S = \frac{1}{2} \left(\begin{matrix}T 2 _ B - T 1 _ A + T 4 _ A - T 3 _ B - offset _ a - offset _ b - F 3 _ A - F 3 _ B - N * T - \\ M * T\end{matrix}\right] * C + \left(T4_A-T1_A\right) * V _ A + \left(T2_B-T3_B\right) * V _ B$

F3_A represents an internal delay of the device A at the moment T1_A, and F3_B represents an internal delay of the device B at T3_B.

In addition, in this case, the information #1 includes any one of t6, t7, t8, t9, and t10, where $t 6 = T 2 _ B - T 3 _ B - F 3 _ B ;$ $t 7 = T 2 _ B - T 3 _ B + offset _ a - F 3 _ B ;$ $t 8 = T 2 _ B - T 3 _ B - offset _ a - F 3 _ B ;$ $t 9 = T 2 _ B - T 3 _ B - offset _ a - F 3 _ B - N * T ;$ and $t 10 = T 2 _ B - T 3 _ B + offset _ a - F 3 _ B - \left(N+1\right) * T$

Similarly, the information #2 may include any one of t6', t7', t8', t9', and t10', where $t 6 ′ = T 4 _ A - T 1 _ A - F 3 _ A ;$ $t 7 ′ = T 4 _A - T 1 _A + offset_b - F 3 _A ;$ $t 8 ′ = T 4 _A - T 1 _A - offset_b - F 3 _A ;$ $t 9 ′ = T 4 _A - T 1 _A - offset_b - F 3 _A - M * T ;$ and $t 10 ′ = T 4 _A - T 1 _A + offset_b - F 3 _A - \left(M+1\right) * T$

The following describes in detail a process of determining F3_A and F3_B.

It is found through research that the internal delay includes the dynamic change part (denoted as the dynamic delay) and the fixed part (denoted as the fixed delay), where the dynamic delay varies with the environment, the parameter, and the like in the case in which the service is sent, and the fixed delay remains unchanged each time the service is sent.

For example, as shown in FIG. 4, when the internal path includes the chip, the optical module, and the laser module, a moment T1 at which the chip adds a pulse signal to a service frame may be recorded, and a moment T2 at which the chip detects the pulse signal may be recorded. Further, an internal delay at the moment T1 is T2-T1-Ta. Ta is a delay on a path a shown in FIG. 4. The path a may be implemented by using a pendulum mirror, and the delay on the path a may be determined through measurement.

For another example, as shown in FIG. 5, when the internal path includes the chip and the optical module, a moment T1' at which the chip adds a pulse signal to a service frame may be recorded, and a moment T2' at which the chip detects the pulse signal may be recorded. Further, an internal delay at the moment T1' is T2'-T1'-Tb. Tb is a delay on a path b shown in FIG. 5. The path b may be implemented by using a fixed-length optical fiber, and the delay on the path b may be determined through measurement.

For another example, as shown in FIG. 6, when the internal path includes the chip, a moment T1" at which the chip adds a pulse signal to a service frame may be recorded, and a moment T2" at which the chip detects the pulse signal may be recorded.

Further, the internal delay at the moment T1" is T2"-T1"-Tc. Tc is a delay on a path c shown in FIG. 6. The path c may be implemented by using an electrical signal transmission line, for example, a bus, and the delay on the path c may be determined through measurement.

In addition, through further research and development, a dynamic delay at a specific moment is related to a phase difference between sending and receiving, by a device at the moment, a signal having a fixed periodicity.

For example, it is assumed that an internal delay detected by a specific device (denoted as a device X) at a specific moment (denoted as a moment A) is Δt_A.

In addition, it is assumed that the device X sends a specific periodic signal (denoted as a signal X) at the moment A, and a phase of the signal X at the moment A is denoted as τA. It is assumed that the device X receives, at a moment B, the signal X returned on an internal path, and a phase of the signal X at the moment B is denoted as τB. In this case, a phase difference of the signal X at the moment A after transmission on the internal path is ϕ1=τB-τA.

An internal delay detected by the device X at another moment (denoted as the moment B) is Δt_B.

In addition, it is assumed that the device B sends the signal X at a moment C, and a phase of the signal X at the moment C is denoted as τC. It is assumed that the device X receives, at a moment D, the signal X returned on the internal path, and a phase of the signal X at the moment D is denoted as τD. In this case, a phase difference of the signal X at the moment C after transmission on the internal path is ϕ2=τD-τC.

In this case, the following relationship exists: Δt_B-Δt_A=ϕ2-ϕ1.

Therefore, in this embodiment of this application, detection of an internal delay of the device A at a specific moment (that is, an example of a fourth moment) (that is, a first delay) may be performed in advance, and is denoted as a delay η₁.

In addition, detection of a non-integer periodicity part of a phase difference between transmitting and receiving, by the device A, of a specific periodic signal having a fixed-frequency pattern (that is, an example of a first signal) (that is, a phase difference between a first phase and a second phase) may be performed in advance, and is denoted as a phase difference δ₁.

In addition, detection of a non-integer periodicity part of a phase difference between transmitting and receiving, by the device A at T1_A, of the periodic signal (that is, a phase difference between a third phase and a fourth phase) may be performed, and is denoted as a phase difference δ₂.

Further, it may be determined that F3_A=η₁+δ₁-δ₂.

F3_B may be determined by using a similar method. To avoid repetition, detailed descriptions thereof are omitted herein.

According to the solution provided in this embodiment of this application, the two ranging parties can accurately complete, by exchanging information about the offset, ranging without aligning the frame header of the service frame with the frame header of the reference frame. In addition, according to the solution described in the foregoing Case 4, the internal delay can be quickly and accurately determined, thereby further improving the ranging accuracy.

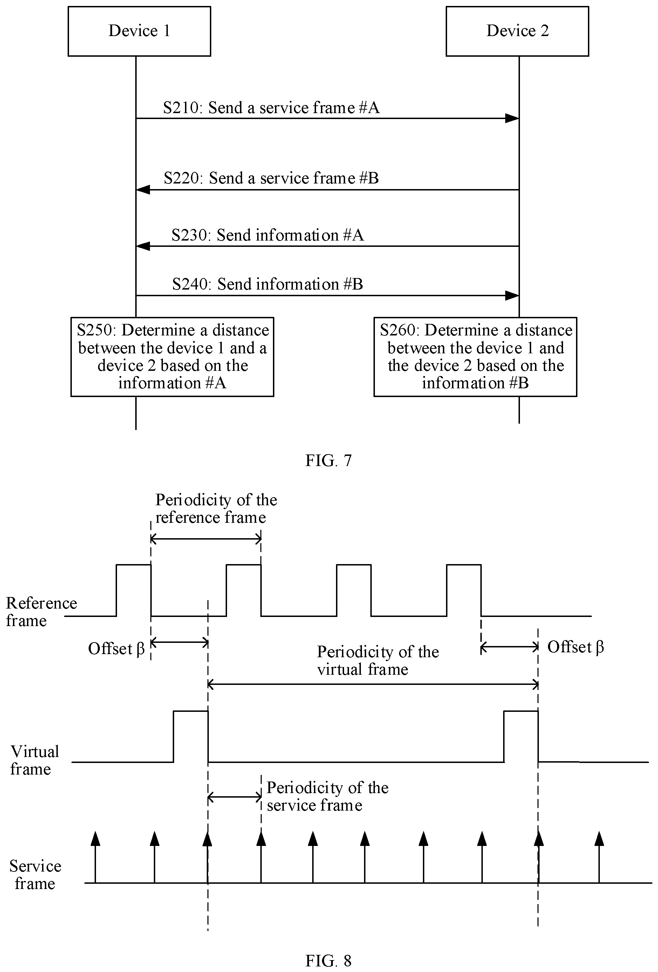

The following describes in detail another ranging method provided in embodiments of this application with reference to FIG. 7 and FIG. 8. FIG. 7 is a schematic interaction diagram of a ranging method 200 according to this application. FIG. 8 is a diagram of a virtual frame maintained by a device 1 and a device 2.

The ranging method 200 is used to measure a distance between the device 1 and the device 2 (specifically, a distance between the device 1 and the device 2 at a moment T1_1 described below). The device 1 (that is, an example of a first device) and the device 2 (that is, an example of a second device) perform time synchronization based on a reference frame (for example, a PPS signal), and the device 1 and the device 2 perform service transmission based on a service frame (for example, an OTN frame or an ISL frame). The foregoing process is similar to that of a conventional technology, and to avoid repetition, detailed descriptions thereof are omitted herein.

As shown in FIG. 8, the device 1 and the device 2 maintain the virtual frame. It is assumed that a periodicity of a reference frame is Tx, a periodicity of a service frame is Ty, and a periodicity of the virtual frame is Tz. In this case, Tz=k*Tx=w*Ty, where k and w are integers. For example, Tz is a least common multiple of Tx and Ty.

In addition, as shown in FIG. 8, there is a fixed offset β between frame headers of the reference frame and the virtual frame that are closest to each other in time domain. In a possible implementation, a value of the offset β may be 0.

For example, in a possible implementation, the periodicity of the reference frame is 1s, the periodicity of the service frame is 17µs, and the periodicity of the virtual frame is 17s. In this case, 17 reference frame headers and 1000000 service frame headers appear in the periodicity of the virtual frame. That is, w=1000000, and k=17.

It is assumed that time corresponding to a 1^{st} reference frame header in FIG. 8 is a moment T. Both the devices agree that 1^{st} ranging initiation time is at the virtual frame header, that is, T1_1=T+β, and a next ranging initiation moment is at an interval of 588 service frames after the reference frame header, that is, T1_2=T+β+δt=T+β+588*17µs=T+β+9996µs, T1_3=T+β+2*9996µs, ..., and T1_n=T+β+n*9996µs, where 2≤n≤1700. That is, n*9996µs does not exceed 17s, and does not overrun into a next virtual reference frame. It is clear that the time δt may alternatively be defined as a non-fixed value, that is, δt1≠δt2 shown in the figure, as long as it is defined that a quantity of times of ranging initiated within 17s does not overrun into next 17s. T1_1 to T1_n are equivalent to the moment T1, and both the devices start ranging at a same agreed moment.

As shown in FIG. 8, the device 1 starts a ranging procedure at a moment (denoted as the moment T1_1), determined by the device 1, at which a falling edge of a frame header of a virtual frame #A (that is, an example of a first virtual frame) arrives.

In S210, the device 1 includes a ranging start identifier in an overhead part that is of a service frame (that is, a first service frame, denoted as a service frame #A) and that is aligned with the frame header of the virtual frame #A, where the ranging start identifier indicates that the device 1 starts ranging, and the ranging start identifier may be a pulse identifier with a fixed specification, so that the device 2 can identify the ranging start identifier from the service frame, and complete a subsequent ranging procedure based on the ranging start identifier.

Similarly, the device 2 starts the following ranging procedure at a moment (denoted as a moment T3_2), determined by the device 2, at which the falling edge of the frame header of the virtual frame #A arrives.

It should be noted that, theoretically, the moment T1_1 and the moment T3_2 are a same moment. Because time synchronization between the device 1 and the device 2 based on the reference frame may have a deviation, a deviation may exist between the moment, determined by the device 1, at which the falling edge of the frame header of the virtual frame #A arrives and the moment, determined by the device 2, at which the falling edge of the frame header of the virtual frame #A arrives. Therefore, in this embodiment of this application, for ease of understanding, the moment, determined by the device 1, at which the falling edge of the frame header of the virtual frame #A arrives and the moment, determined by the device 2, at which the falling edge of the frame header of the virtual frame #A arrives are recorded in a distinguished manner.

In S220, the device 2 includes a ranging start identifier in an overhead part that is of a service frame (that is, a first service frame, denoted as a service frame #B) and that is aligned with the frame header of the virtual frame #A, where the ranging start identifier indicates that the device 2 starts ranging, and the ranging start identifier may be a pulse identifier with a fixed specification, so that the device 1 can identify the ranging start identifier from the service frame, and complete a subsequent ranging procedure based on the ranging start identifier.

As shown in FIG. 8, the device 2 detects the ranging start identifier at a moment T2_2 (that is, an example of a second moment).

The device 1 detects the ranging start identifier at a moment T4_1 (that is, an example of a third moment).

As shown in FIG. 7, in S230, the device 2 sends information #A (that is, an example of first information) to the device 1, where the information #A is associated with T2_2, or the information #A is determined based on T2_2.

In S240, the device 1 sends information #B (that is, an example of second information) to the device 2, where the information #B is associated with T4_1, or the information #B is determined based on T4_1.

In S250, the device 1 determines a distance between the device 1 and the device 2 based on the information #A.

In S260, the device 2 determines a distance between the device 1 and the device 2 based on the information #B.

### Case a

To be specific, the device 1 and the device 2 are relatively static, and the deviation in the synchronization between the device 1 and the device 2 based on the reference frame is not considered.

Specifically, assuming that the distance between the device 1 and the device 2 is S, when the device 1 and the device 2 are relatively static, S=[T2_2-T1_1]*C=[T4_1-T3_2]*C may be determined.

The information #A may include information about T2_2, and the information #B may include information about T4_1.

### Case b

To be specific, the device 1 and the device 2 are relatively static, and the deviation in the synchronization between the device 1 and the device 2 based on the reference frame is considered.

In this case, impact of the deviation on ranging accuracy may be eliminated according to the following principle.

As described above, S=[T2_2-T1_1]*C=[T4_1-T3_2]*C. Therefore, S=[½(T2_2-T1_1+T4_1-T3_2]*C can be deduced.

Calculation processes of T4_1-T1_1 and T2_2-T3_2 can eliminate the deviation in the synchronization between the device 1 and the device 2 based on the reference frame.

In this case, the information #A may include a value of T2_B-T3_B.

Similarly, the information #B may include a value of T4_1-T1_1.

It should be noted that the foregoing lists a solution in which two ranging parties jointly calculate the distance. However, this application is not limited thereto. For example, the device 1 may not send the information #B, and the device 1 unilaterally determines the distance S between the device 1 and the device 2 based on the information #A. In addition, the device 1 may further notify the device 2 of information about the distance S based on an actual requirement. To avoid repetition, descriptions of a same or similar case are omitted below.

### Case c

To be specific, the device 1 and the device 2 move relative to each other, and the deviation in the synchronization between the device 1 and the device 2 based on the reference frame is considered.

In this case, the device 1 may determine a movement velocity (including a velocity direction and a velocity value, denoted as V_1) of the device 1 and a movement velocity (including a velocity direction and a velocity value, denoted as V_2) of the device 2. In this case, the distance S between the device 1 and the device 2 when the two parties initiate ranging meets the following condition: $S = \left[\frac{1}{2}\left(T2_2-T1_1+T4_1-T3_2*T\right.\right] * C + \left(T4_1-T1_1\right) * V_ 1 + \left(T2_2-T3_2\right) * V_ 2$

### Case d

To be specific, in addition to relative movement between the device 1 and the device 2, and the deviation in the synchronization between the device 1 and the device 2 based on the reference frame, impact of an internal delay of the device 1 and the device 2 on the ranging accuracy is further considered in this embodiment of this application.

As shown in FIG. 4, from adding a timestamp (for example, the ranging start identifier, the information #1, or the information #2) to a service frame by a communication device to transmitting the service frame from an output port of the communication device, an internal delay generated due to processing on an internal path needs to be experienced.

For the internal delay, refer to the related descriptions in the foregoing Case 4. To avoid repetition, detailed descriptions thereof are omitted herein.

An internal delay of the device 1 at T1_1 is denoted as F3_1, and an internal delay of the device 2 at T3_2 is denoted as F3_2.

In this case, the distance S between the device 1 and the device 2 when the two parties initiate ranging meets any one of the following conditions: $S = \left[\frac{1}{2}\left(T2_2-T1_1+T4_1-T3_2-F3_1-F3_1\right)\right] * C + \left(T4_1-T1_1\right) * V_ 1 + \left(\begin{matrix}T 2 _ 2 - \\ T 3 _ 2\end{matrix}\right) * V_ 2$

In addition, in this case, the information #A includes a value of T2_2-T3_2-F3_2.

Similarly, the information #B includes a value of T4_1-T1_1-F3_1.

For a process of determining F3_1 and F3_2, refer to the foregoing process of determining F3_A and F3_B. To avoid repetition, detailed descriptions thereof are omitted herein.

According to the solution provided in this embodiment of this application, the two ranging parties maintain the virtual frame, so that a limitation in the conventional technology that it is required that the periodicity of the reference frame needs to be an integer multiple of the periodicity of the service frame is removed, thereby greatly improving configuration flexibility of the service frame and further improving practicability of the ranging method.

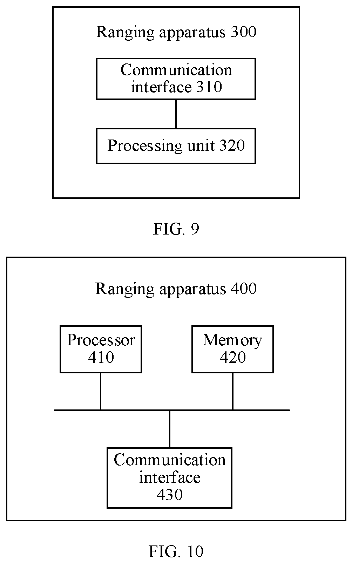

FIG. 9 is a schematic block diagram of a ranging apparatus according to this application. As shown in FIG. 9, the apparatus 300 includes a communication interface 310 and a processing unit 320.

The processing unit 320 is configured to perform processes such as signal generation, signal processing, and calculation in the foregoing method 100 and method 200. To avoid repetition, detailed descriptions thereof are omitted herein.

The communication interface 310 is configured to perform signal sending and receiving processes in the foregoing method 100 and method 200. To avoid repetition, detailed descriptions thereof are omitted herein.

In the foregoing implementations, the communication interface 310 may include an output interface, and the output interface is configured to implement an output (or a sending) function. The communication interface 310 may further include an input interface, and the input interface is configured to implement an input (or a receiving) function.

The processing unit 320 may be a processing apparatus. A function of the processing apparatus may be implemented by hardware, or may be implemented by hardware executing corresponding software. For example, the processing apparatus may include at least one processor and at least one memory. The at least one memory is configured to store a computer program. The at least one processor reads and executes the computer program stored in the at least one memory, so that the apparatus 300 performs operations and/or processing performed by the controller in the method embodiments.

Optionally, the processing apparatus may include only the processor, and the memory configured to store the computer program is located outside the processing apparatus. The processor is connected to the memory through a circuit/wire, to read and execute the computer program stored in the memory.

In some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or data to the processing circuit. The processing circuit processes the signal and/or the data, to implement functions of the control component in the method embodiments.

FIG. 10 is a diagram of a structure of a ranging apparatus according to this application. As shown in FIG. 10, the communication apparatus 400 includes one or more processors 410, one or more memories 420, and one or more communication interfaces 430. The processor 410 is configured to control the communication interface 430 to receive and send information. The memory 420 is configured to store a computer program. The processor 410 is configured to invoke the computer program from the memory 420 and run the computer program, so that the apparatus 400 performs processing and/or operations in the method embodiments of this application.

For example, the processor 410 may have a function of the processing unit 320 in FIG. 9, and the communication interface 430 may have a function of the communication interface 310 in FIG. 9.

Optionally, the memory and the processor in the foregoing apparatus embodiments may be physically independent units, or the memory and the processor may be integrated together. This is not limited herein.

In addition, this application further provides a computer-readable storage medium. The computer-readable storage medium stores computer instructions. When the computer instructions are run on a computer, the computer is caused to perform the operation and/or procedure performed by the controller in the method embodiments of this application.

In addition, this application further provides a computer program product. The computer program product includes computer program code or instructions. When the computer program code or the instructions are run on a computer, the operation and/or procedure performed by the controller in the method embodiments of this application are/is performed.

In addition, this application further provides a chip. The chip includes a processor. A memory configured to store a computer program is disposed independent of the chip. The processor is configured to execute the computer program stored in the memory, so that a controller in which the chip is mounted performs the operation and/or processing performed by the controller in any method embodiment.

Further, the chip may further include a communication interface. The communication interface may be an input/output interface, an interface circuit, or the like. Further, the chip may include the memory.

In addition, this application further provides a communication apparatus (for example, may be a chip), including a processor and a communication interface. The communication interface is configured to receive a signal and transmit the signal to the processor, and the processor processes the signal, so that the operation and/or processing performed by the controller in any method embodiment are/is performed.

A processor in embodiments of this application may be an integrated circuit chip, and has a signal processing capability. In an implementation process, steps in the foregoing method embodiments can be completed by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification includes but is not limited to these and any memory of another proper type.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A ranging method, wherein the ranging method comprises:
sending, by a first device, a plurality of first service frames to a second device, wherein a current first service frame in the plurality of first service frames comprises a first ranging start identifier and a first offset, the first offset is an offset between a frame header of any first service frame in the plurality of first service frames and a frame header of a first reference frame, the current first service frame and a first service frame corresponding to the first offset are separated by N periodicities T, the first reference frame is used for time synchronization between the first device and the second device, and N≥0;
receiving, by the first device, a plurality of second service frames from the second device, wherein a current second service frame in the plurality of second service frames comprises a second ranging start identifier and a second offset, the second offset is an offset between a frame header of any second service frame in the plurality of second service frames and the frame header of the first reference frame, the current second service frame and a second service frame corresponding to the second offset are separated by M periodicities T, and M≥0;
receiving, by the first device, first information from the second device, wherein the first information is associated with a second moment, and the second moment is a moment at which the second device detects the first ranging start identifier; and
determining, by the first device, a distance between the first device and the second device based on the first information, wherein the distance is associated with the following parameters:
a first moment corresponding to the frame header of the first reference frame, the second moment, a third moment, the first offset, the second offset, a value of N, a value of M, and a value of T, wherein
the third moment is a moment at which the first device detects the second ranging start identifier.

2. The ranging method according to claim 1, wherein the first offset is less than the periodicity T, and/or
the second offset is less than the periodicity T.

3. The ranging method according to claim 1 or 2, wherein the first service frame corresponding to the first offset is a frame previous to the current first service frame, or the first service frame corresponding to the first offset and the current first service frame are a same frame; and
the second service frame corresponding to the second offset is a frame previous to the current second service frame, or the second service frame corresponding to the second offset and the current second service frame are a same frame.

4. The ranging method according to any one of claims 1 to 3, wherein the method further comprises:
sending, by the first device, second information to the second device, wherein the first information is associated with the third moment.

5. The ranging method according to any one of claims 1 to 4, wherein the first information indicates any one of the second moment, a first result t1, a second result t2, a third result t3, a fourth result t4, and a fifth result t5, wherein $t 1 = T 2 _B - T 3 _B ;$ $t 2 = T 2 _B - T 3 _B + offset_a ;$ $t 3 = T 2 _B - T 3 _B - offset_a ;$ $t 4 = T 2 _B - T 3 _B - offset_a - M * T ;$ $t 5 = T 2 _B - T 3 _B + offset_a - \left(M+1\right) * T ;$ and
T2_B represents the second moment, T3_B represents the first moment determined by the second device, and offset_a represents the first offset.

6. The ranging method according to any one of claims 1 to 5, wherein the distance is further associated with a first compensation value and a second compensation value, the first compensation value comprises a delay on an internal path of the first device at the first moment, and the second compensation value comprises a delay on an internal path of the second device at the first moment.

7. The ranging method according to claim 6, wherein the internal path comprises a processor, and the processor is configured to generate or parse an electrical signal;
the internal path comprises the processor and an optical module, and the optical module is configured to perform optical-electrical conversion; or
the internal path comprises the processor, the optical module, and a laser module, and the laser module is configured to generate or parse a laser signal.

8. The ranging method according to claim 6 or 7, wherein the first information indicates any one of a sixth result t6, a seventh result t7, an eighth result t8, a ninth result t9, and a tenth result t10, wherein $t 6 = T 2 _B - T 3 _B - F 3 _B ;$ $t 7 = T 2 _B - T 3 _B + offset_a - F 3 _B ;$ $t 8 = T 2 _B - T 3 _B - offset_a - F 3 _B ;$ $t 9 = T 2 _B - T 3 _B - offset_a - F 3 _B - M * T ;$ $t 10 = T 2 _B - T 3 _B + offset_a - F 3 _B - \left(M+1\right) * T ;$ and
T2_B represents the second moment, T3_B represents the first moment determined by the second device, offset_a represents the first offset, T represents a periodicity of the service frame, and F3_B represents the second compensation value.

9. The ranging method according to any one of claims 6 to 8, wherein the method further comprises:
performing, by the first device at a fourth moment, detection of a first delay on the internal path of the first device;
sending, by the first device, a first signal on the internal path at the fourth moment, and recording a first phase of the first signal at the fourth moment, wherein the first signal is a periodic signal;
receiving, by the first device, the first signal from the internal path at a fifth moment, and recording a second phase of the first signal at the fifth moment;
determining, by the first device, a first dynamic delay based on the first phase and the second phase, wherein the first dynamic delay comprises a non-integer periodicity part of a phase difference between the first phase and the second phase;
sending, by the first device, the first signal on the internal path at the third moment, and recording a third phase of the first signal at the third moment;
receiving, by the first device, the first signal from the internal path at a sixth moment, and recording a fourth phase of the first signal at the sixth moment;
determining, by the first device, a second dynamic delay based on the third phase and the fourth phase, wherein the second dynamic delay comprises a non-integer periodicity part of a phase difference between the third phase and the fourth phase; and
determining, by the first device, the first compensation value based on the first delay and a deviation between the first dynamic delay and the second dynamic delay.

10. The ranging method according to any one of claims 1 to 8, wherein the first device and the second device comprise a satellite, and the service frame comprises an optical transport network OTN frame or an inter-satellite link ISL frame.

11. A ranging method, wherein the ranging method comprises:
sending, by a first device, a first service frame to a second device, wherein the first service frame comprises a first ranging start identifier, a frame header of the first service frame corresponds to a frame header of a first virtual frame, the frame header of the first virtual frame corresponds to a frame header of a first reference frame, a first periodicity corresponding to the first virtual frame is an integer multiple of a second periodicity corresponding to the first service frame, and the first periodicity is an integer multiple of a third periodicity corresponding to the first reference frame;
receiving, by the first device, a second service frame from the second device, wherein the second service frame comprises a second ranging start identifier, and a frame header of the second service frame corresponds to the frame header of the first virtual frame;
receiving, by the first device, first information from the second device, wherein the first information is associated with a second moment, and the second moment is a moment at which the second device detects the first ranging start identifier; and
determining, by the first device, a distance between the first device and the second device based on the first information, wherein the distance is associated with the following parameters:
a first moment corresponding to the frame header of the first virtual frame, the second moment, and a third moment, wherein
the third moment is a moment at which the first device detects the ranging start identifier in the second service frame.

12. The ranging method according to claim 11, wherein the first information indicates the second moment or a first result t1, wherein $t 1 = T 2 _B - T 3 _B ;$ and
T2_B represents the second moment, and T3_B represents the first moment determined by the second device.

13. The ranging method according to claim 11 or 12, wherein the distance is further associated with a first compensation value and a second compensation value, the first compensation value comprises a delay on an internal path of the first device at the first moment, and the second compensation value comprises a delay on an internal path of the second device at the first moment.

14. The ranging method according to claim 13, wherein the first information indicates a second result t2, wherein $T 2 = T 2 _B - T 3 _B - F 3 _B ;$ and
T2_B represents the second moment, T3_B represents the first moment determined by the second device, and F3_B represents the second compensation value.

15. The ranging method according to claim 13 or 14, wherein the method further comprises:
performing, by the first device at a fourth moment, detection of a first delay on the internal path of the first device;
sending, by the first device, a first signal on the internal path at the fourth moment, and recording a first phase of the first signal at the fourth moment, wherein the first signal is a periodic signal;
receiving, by the first device, the first signal from the internal path at a fifth moment, and recording a second phase of the first signal at the fifth moment;
determining, by the first device, a first dynamic delay based on the first phase and the second phase, wherein the first dynamic delay comprises a non-integer periodicity part of a phase difference between the first phase and the second phase;
sending, by the first device, the first signal on the internal path at the third moment, and recording a third phase of the first signal at the third moment;
receiving, by the first device, the first signal from the internal path at a sixth moment, and recording a fourth phase of the first signal at the sixth moment;
determining, by the first device, a second dynamic delay based on the third phase and the fourth phase, wherein the second dynamic delay comprises a non-integer periodicity part of a phase difference between the third phase and the fourth phase; and
determining, by the first device, the first compensation value based on the first delay and a deviation between the first dynamic delay and the second dynamic delay.

16. The ranging method according to any one of claims 11 to 15, wherein the third periodicity is not an integer multiple of the second periodicity.

17. The ranging method according to any one of claims 11 to 16, wherein there is an offset between the frame header of the first service frame and the frame header of the first reference frame.

18. The ranging method according to any one of claims 11 to 17, wherein the frame header of the first service frame is aligned with the frame header of the first virtual frame, or there is a preset offset between the frame header of the first service frame and the frame header of the first virtual frame.

19. The ranging method according to any one of claims 11 to 18, wherein the service frame comprises an optical transport network OTN frame or an inter-satellite link ISL frame.

20. The ranging method according to any one of claims 11 to 19, wherein the first device and the second device comprise a satellite or a transport device.

21. A ranging apparatus, comprising:
a unit configured to implement the method according to any one of claims 1 to 10; or
a unit configured to implement the method according to any one of claims 11 to 20.

22. A computer-readable storage medium, wherein the computer-readable storage medium stores a computer program, and when the computer program is run,
an apparatus is caused to perform the method according to any one of claims 1 to 10; or
an apparatus is caused to perform the method according to any one of claims 11 to 20.

23. A chip system, comprising a processor, configured to invoke a computer program from a memory and run the computer program,
to cause an apparatus on which the chip system is installed to perform the method according to any one of claims 1 to 10; or
to cause an apparatus on which the chip system is installed to perform the method according to any one of claims 11 to 20.

24. A computer program product, comprising: a computer program, wherein when the computer program is run,
a computer is caused to perform the method according to any one of claims 1 to 10; or
a computer is caused to perform the method according to any one of claims 11 to 20.
